(19) Europäisches Patentamt

European Patent Office

Office européen des brevets

(11) Veröffentlichungsnummer: **0 365 739**
**A1**

(12) **EUROPÄISCHE PATENTANMELDUNG**

(21) Anmeldenummer: 89107125.0

(22) Anmeldetag: 20.04.89

(51) Int. Cl.⁵: **B60R 21/26**

(30) Priorität: 17.10.88 DE 3835356

(43) Veröffentlichungstag der Anmeldung:
02.05.90 Patentblatt 90/18

(84) Benannte Vertragsstaaten:
**DE FR GB IT SE**

(71) Anmelder: **Bayern-Chemie Gesellschaft für flugchemische Antriebe mit beschränkter Haftung**

**D-8261 Aschau a. Inn(DE)**

(72) Erfinder: **Nilsson, Erik**
**Uhlandstrasse 51**
**D-8012 Ottobrunn(DE)**

(74) Vertreter: **Frick, Gerhard**
**Messerschmitt-Bölkow-Blohm GmbH**
**Patentabteilung Robert-Koch-Strasse**
**D-8012 Ottobrunn(DE)**

(54) **Gasgenerator.**

(57) Um Verletzungen von Personen zu verhindern, die sich unmittelbar vor dem Gasgenerator befinden, weist ein Airbag in der Brennkammer (3) einen Blecheinsatz (9) auf, der den Treibstoff in zwei Teile teilt, wobei der eine erste Teil (10) des Treibstoffs im Bereich der Zündöffnungen (8) und der andere, zweite Teil (12) des Treibstoffs im Bereich der Übertrittsöffnungen (15) des Treibgases von der Brennkammer (3) in die Filterkammer (6) angeordnet ist. An dem von den Zündöffnungen (8) abgewandten Ende weist der Blecheinsatz (9) eine kleinere Öffnung (14) zum Übertritt der Treibgase des ersten Treibstoffteils (10) zu dem zweiten Treibstoffteil (12) auf.

FIG. 1

## Gasgenerator

Die Erfindung bezieht sich auf das aufblasbare Schutzkissen eines Aufprallschutz-Systems für Fahrzeuginsassen (Airbag) nach dem Oberbegriff des Anspruchs 1.

Bei den bekannten Airbag-Gasgeneratoren hat sich gezeigt, daß z. B. Kinder, die unmittelbar vor dem Armaturenbrett und damit dem Gasgenerator stehen (sog. "out-of-position" oder bei Kindern "standing-child-position") Verletzungen erleiden können, wenn der Gasgenerator ausgelöst wird. Um diesem Problem zu begegnen, sind zahlreiche Vorschläge gemacht worden, beispielsweise die Aufblasgeschwindigkeit durch Vergrößerung der Treibstoff-Pellets herabzusetzen. Dadurch wird jedoch der gesamte Aufblasverlauf langsamer und es besteht die Gefahr, daß der Airbag seine Schutzfunktion nicht mehr voll erfüllt, da er vollständig aufgeblasen sein muß, wenn der Insasse mit hoher Geschwindigkeit nach vorne geschleudert, d. h., wenn die Knautschzone des Fahrzeugs aufgebraucht wird.

Weiterhin wird eine bestimmte Zeitspanne von z. B. 15 ms nach dem Aufprallbeginn benötigt, damit die Auslöseeinrichtungen aufgrund der Sensorsignale beurteilen können, ob eine unfallkritische Situation vorliegt oder nicht. Es stehen sich also entgegengesetzte Forderungen, d. h. ein langsames Aufblasen zur Verhütung von Verletzungen bei einem Unfall in der ersten Phase einerseits und schnelles Aufblasen zur vollständigen Entfaltung und Schutzwirkung des Airbag andererseits entgegen.

Aus der DE-OS 22 24 201 ist ein Gasgenerator bekannt, der zwei mit Treibstoff gefüllte Brennkammern aufweist, die jeweils mit eigenen Gasauslässen zu dem Schutzkissen versehen sind. Damit wird ein Teil des von dem Treibstoff in der ersten Brennkammer erzeugten Gases unmittelbar in das Schutzkissen geleitet, wobei der restliche Teil der Treibgase des Treibstoffs der ersten Brennkammer den Treibstoff in der zweiten Brennkammer zündet, um das Schutzkissen vollständig aufzublasen. Durch das Aufblasen in zwei Stufen soll die Belastung des Schutzkissens herabgesetzt und ein allzu hoher, d. h. gegebenenfalls zu Gehörschäden führender Schalldruck verhindert werden.

Aufgabe der Erfindung ist es, einen Gasgenerator bereitzustellen, bei dem auch bei einer eventuellen "out-of-position" keine Verletzungen auftreten, und zwar mit einem relativ geringen Herstellungsaufwand, wobei der Gasgenerator an den jeweiligen Anwendungsfall, wie Fahrzeugtyp usw., leicht anpaßbar sein soll.

Dies wird erfindungsgemäß mit dem im Anspruch 1 gekennzeichneten Gasgenerator erreicht.

In den Unteransprüchen sind vorteilhafte Ausgestaltungen der Erfindung wiedergegeben.

Nach der Erfindung wird also zunächst nur derjenige Teil des Treibstoffs gezündet, der unmittelbar im Bereich der Anzündöffnungen angeordnet ist. D. h., das Treibgas wird zu Beginn nur von dem ersten Treibstoffteil erzeugt, gelangt über die Durchtrittsöffnungen an oder in den Blecheinsatz zu dem zweiten Treibstoffteil, von dort über die Durchtrittsöffnungen von der Brennkammer in die Filterkammer und von der Filterkammer schließlich in das Schutzkissen.

Das durch den ersten Treibstoffteil freigesetzte Gasvolumen wird so gesteuert, daß eine Person, insbesondere ein Kind, das sich unmittelbar vor einem Airbag befinden sollte, sanft in den Sitz gedrückt wird. Zugleich zünden die von dem ersten Treibstoffteil erzeugten Treibgase auf ihrem Weg von der Öffnung zwischen dem ersten und dem zweiten Treibstoffteil zu den Übertrittsöffnungen in die Filterkammer den zweiten, in größerer Menge vorliegenden Treibstoffteil an, wodurch schlagartig eine große Menge Treibgas freigesetzt wird, welches das Schutzkissen in kürzester Zeit vollständig aufbläst und den normalerweise im Sitz befindlichen Insassen vor Unfallverletzungen schützt.

Der entscheidende Vorteil der Erfindung besteht darin, daß sie ohne wesentliche Änderungen bei den vorhandenen, ausgereiften und bereits in großen Serien gefertigten Gasgeneratoren anwendbar ist, beispielsweise bei einem Gasgenerator nach der DE-OS 29 15 202. Ein weiterer Vorteil der Erfindung liegt in ihrer Einfachheit, d. h. die vorhandenen Airbag-Gasgeneratoren aus der Serienproduktion brauchen lediglich mit dem Einsatzblech in der Brennkammer versehen zu werden.

Auch können bei dem erfindungsgemäßen Gasgenerator die beiden Vorgänge (sanfter Druckanstieg einerseits und vollständiges schnelles Füllen des Schutzkissens andererseits) durch einfache Maßnahmen gesteuert werden, insbesondere durch die Anordnung des Blecheinsatzes im Brennraum, also beispielsweise das Mengenverhältnis des ersten Treibstoffteils zu dem zweiten Treibstoffteil, den Querschnitt der Öffnung zwischen den beiden Treibstoffteilen, den Durchmessern der Pellets und dgl.. Dadurch kann der erfindungsgemäße Gasgenerator den jeweiligen Verhältnissen, beispielsweise dem jeweiligen Fahrzeugtyp leicht angepaßt werden, also z. B. entsprechend der jeweiligen Knautschzone und der Innenausstattung des Pkw.

Auch brauchen nicht sämtliche Airbag-Gasgeneratoren an den Vordersitzen eines Kraftfahrzeuges erfindungsgemäß ausgebildet zu sein. Da Kinder praktisch nur vor dem Beifahrersitz stehen können, reicht es vielmehr aus, wenn nur der oder die dem Beifahrersitz zugeordneten Gasgeneratoren mit dem erfindungsgemäßen Blecheinsatz versehen sind. D. h., die Gasgeneratoren auf der Fahrerseite können in herkömmlicher Weise, also ohne den erfindungsgemäßen Blecheinsatz ausgebildet sein.

Nachstehend ist die Erfindung anhand der Zeichnung näher erläutert. Darin zeigen

Fig. 1 einen Schnitt durch einen Teil eines herkömmlichen Gasgenerators mit einer ersten Ausführungsform des Blecheinsatzes nach der Erfindung;

Fig. 2 einen Schnitt entsprechend Fig. 1 durch den gleichen Gasgenerator, jedoch mit einer anderen Ausführungsform des Blecheinsatzes; und

Fig. 3 einen Schnitt durch einen Teil eines anderen Gasgenerators mit wieder einer anderen Ausführungsform des Blecheinsatzes.

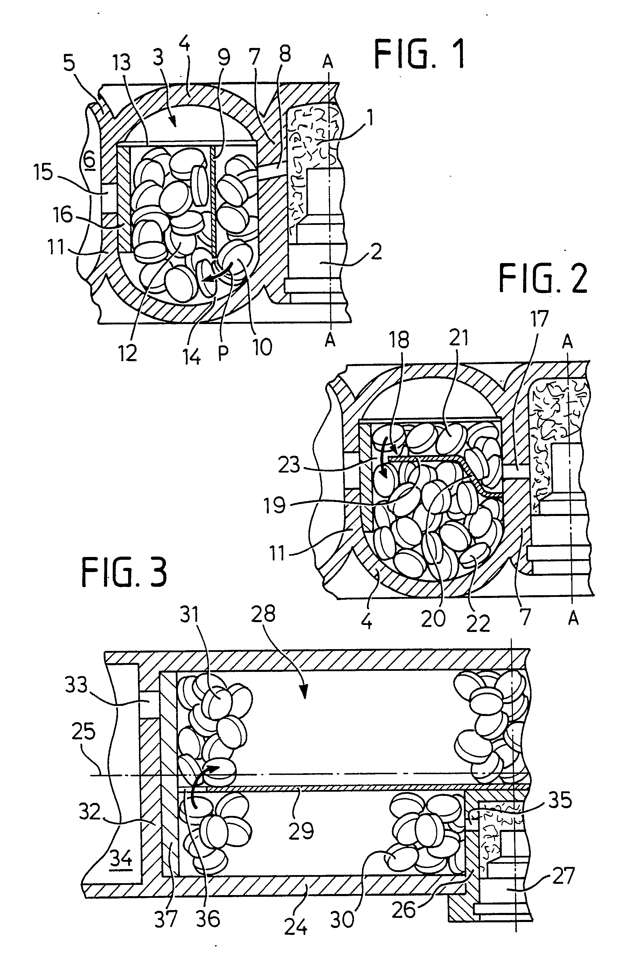

In Fig. 1 und 2 ist ein herkömmlicher Gasgenerator teilweise wiedergegeben, wie er beispielsweise aus der DE-OS 29 15 202 hervorgeht. Danach ist in einer oben geschlossenen Zentralkammer 1 eine Zündeinrichtung 2 angeordnet. Um die Zentralkammer 1 erstreckt sich konzentrisch zur zentralen Achse A-A eine toroid-förmige Brennkammer 3 in einem Gehäuse 4 und um die Brennkammer 3 in einem Gehäuse 5 eine Filterkammer 6.

Das Brennkammergehäuse 4 ist an seiner der Zentralkammer 1 zugewandten inneren Umfangswand 7 mit Zündöffnungen 8 versehen, durch welche die heißen Anzündgase von der Zentralkammer 1 in die Brennkammer 3 eintreten.

Die Brennkammer 3 ist durch einen zur Zentralachse A-A konzentrisch angeordneten rohrförmigen Blecheinsatz 9 in zwei Abschnitte unterteilt, wobei jeder der beiden Abschnitte mit einem Festtreibstoff in Form von Pellets gefüllt ist, und zwar der Abschnitt zwischen dem Blecheinsatz 9 und der Innenumfangswand 7 des Brennkammergehäuses 4 mit einem ersten Teil 10 des Treibstoffs und der Abschnitt zwischen dem Blecheinsatz 9 und der Außenumfangswand 11 des Brennkammergehäuses 4 mit einem zweiten Teil 12 des Treibstoffs. Die Menge des Treibstoffs des zweiten Teils 12 ist dabei größer als die Menge des ersten Teils 10.

Der Treibstoff 10, 12 wird nach oben hin durch einen Deckel 13 abgedeckt, um ihn zu fixieren und damit beispielsweise Schüttelgeräusche zu verhindern.

Der Blecheinsatz 9 ist an einem, d. h. in Fig. 1 an seinem unteren, Ende mit Öffnungen 14 versehen, wodurch die von dem ersten Teil 10 des Treibstoffs erzeugten Treibgase zu dem zweiten Teil 12 des Treibstoffs in den anderen Trennkammerabschnitt gelangen können gemäß dem Pfeil P. Die Zündöffnungen 8 sind demgegenüber im oberen Bereich der Brennkammer 3 vorgesehen. Sie liegen damit dem von den Durchtrittsöffnungen 14 abgewandten Endbereich des Blecheinsatzes 9 gegenüber.

Die äußere Umfangswand 11 des Brennkammergehäuses 4 ist mit Öffnungen 15 versehen, über welche das Treibgas von der Brennkammer 3 in die Filterkammer 6 eintritt. Vor den Übertrittsöffnungen 15 ist ein Sieb oder Filter 16 angeordnet. Die Übertrittsöffnungen 15 sind gegenüber den Zündöffnungen 8 in axialer Richtung, in Bezug auf die zentrale Achse A-A, zur Mitte der Brennkammer 3 hin versetzt angeordnet. Von der Filterkammer 6, in der die heißen Partikel in dem Treibgas zurückgehalten werden, strömt das Treibgas durch in der Zeichnung nicht dargestellte Öffnungen in das gleichfalls in der Zeichnung nicht dargestellte zusammengefaltete Schutzkissen, welches den Gasgenerator nach oben abdeckt.

Wenn der Gasgenerator ausgelöst wird, wird also zunächst nur der erste Teil 10 des Treibstoffs über die Zündöffnungen 8 von der Zündeinrichtung 2 angefeuert, wodurch das Schutzkissen zunächst nur soviel aufgeblasen wird, daß eine in dem Fahrzeug unmittelbar vor dem Airbag sich befindende Person sanft in den Sitz gedrückt wird. Das von dem ersten Teil 10 des Treibstoffs erzeugte Treibgas zündet beim Durchtritt von der Durchtrittsöffnung 14 im Blecheinsatz 9 zu den Übertrittsöffnungen 15 zugleich den zweiten Teil 12 des Treibstoffs, der in einer relativ großen Menge vorliegt, an. Dies hat einen steilen Anstieg der Treibgaserzeugung und damit ein vollständiges Füllen des Schutzkissens in einer relativ kurzen Zeit zur Folge.

Die Ausführungsform nach Fig. 1 besitzt u. a. den Vorteil, daß der Treibstoff 10, 12 relativ einfach in die Brennkammer 3 gefüllt werden kann. Die Ausführungsform nach Fig. 2 unterscheidet sich von derjenigen nach Fig. 1 im wesentlichen dadurch, daß die Zündöffnungen 17 axial zur Mitte hin versetzt sind und der Blecheinsatz 18 tellerförmig ausgebildet ist, d. h. einen zur Hauptachse A-A im wesentlichen radialen Außenabschnitt 19 aufweist, der sich über eine Kröpfung 20 zur Innenumfangswand 7 des Brennkammergehäuses 4 erstreckt.

Dadurch wird ein erstes oberes Treibstoffteil 21 gebildet, das von dem Anzündgas der Zündeinrichtung 2 über die Zündöffnungen 8 angefeuert wird.

Die Öffnung 23 zwischen dem ersten oberen Treibstoffteil 21 und dem zweiten unteren Treibstoffteil 22 wird durch einen Spalt zwischen dem Blecheinsatz 18 und der Außenumfangswand 11 des Brennkammergehäuses 4 gebildet. Das Einsatzblech 18 kann bei dieser Ausführungsform als einfach herzustellendes Stanzteil ausgebildet werden.

Der Gasgenerator nach Fig. 3 weist als Gehäuse ein Rohr 24 mit der Rohrachse 25 auf. Die Zentralkammer mit der Zündeinrichtung 27 wird durch ein oben geschlossenes Rohr 26 gebildet, welches in Bezug auf die Längsrichtung des Rohres 24 in der Mitte angeordnet ist und sich von unten quer in das Innere des Rohres 24, d. h. die Brennkammer 28 erstreckt.

Die Brennkammer 28 ist durch einen parallel zur Rohrachse 25 angeordenten Blecheinsatz 29 unterteilt, und zwar in einen ersten Treibstoffteil 30 und einen zweiten Treibstoffteil 31. Durch einen Deckel 32 mit Durchtrittsöffnungen 33 zur Filterkammer 34 wird die Brennkammer 28 nach außen abgeschlossen.

Der erste Teil 30 des Treibstoffs befindet sich damit in dem den Zündöffnungen 35 benachbarten Bereich der Brennkammer 28, also in dem Abschnitt, der durch das Rohr 26 mit der Zündeinrichtung 27 und den Zündöffnungen, dem Blecheinsatz 29 und dem Deckel 32 begrenzt wird.

Ein Spalt zwischen dem Deckel 32 und dem Blecheinsatz 29 stellt eine Öffnung 36 zwischen den beiden Treibstoffteilen 30, 31 her. Vor der Durchtrittsöffnung 33 von der Brennkammer 28 in der Filterkammer 34 ist ein Sieb oder Filter 37 angeordnet.

## Ansprüche

1. Gasgenerator für das aufblasbare Schutzkissen eines Aufprallschutz-Systems für Fahrzeuginsassen mit einem Brennraum, der mit Festtreibstoff gefüllt ist, welcher über in dem Brennraumgehäuse vorgesehene Zündöffnungen von einer Zündeinrichtung angefeuert wird, wobei das Brennraumgehäuse auf der den Zündöffnungen gegenüberliegenden Seite Öffnungen zum Durchtritt des von dem Treibstoff erzeugten Treibgases von der Brennkammer in eine Filterkammer aufweist, von der das Treibgas in das Schutzkissen austritt, dadurch gekennzeichnet, daß in der Brennkammer (3, 28) ein Blecheinsatz (9, 18, 29) vorgesehen ist, der den Treibstoff in zwei Teile teilt, wobei der eine erste Teil (10, 21, 30) des Treibstoffs im Bereich der Zündöffnungen (8, 17, 35) und der andere zweite Teil (12, 22, 31) des Treibstoffs im Bereich der Übertrittsöffnungen (15, 33) zur Filterkammer (6, 34) angeordnet ist und an dem von den Zündöffnungen (8, 17, 35) abgewandten Ende des Blecheinsatzes (9, 18, 29) Öffnungen (14, 23, 36) zwischen dem ersten Teil (10, 21, 30) und dem zweiten Teil (12, 22, 31) des Treibstoffs zum Übertritt der Treibgase des ersten Treibstoffteils (10, 21, 30) in den zweiten Treibstoffteil (12, 22, 31) vorgesehen ist.

2. Gasgenerator nach Anspruch 1, dadurch gekennzeichnet, daß die Menge des ersten Treibstoffteils (10, 21, 30) kleiner ist als die Menge des zweiten Treibstoffteils (12, 22, 31).

3. Gasgenerator nach Anspruch 1 oder 2, dadurch gekennzeichnet, daß der Treibstoff durch Treibstoff-Pellets gebildet wird.

# FIG. 1

# FIG. 2

# FIG. 3

10575

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | FR-A-2 188 536 (ALLIED CHEMICAL CORPORATION) <br> * Anspruch 1 * <br> --- | 1 | B 60 R 21/26 |
| D,A | DE-A-2 915 202 (BAYERN-CHEMIE) <br> * Seite 8, Zeile 28 - Seite 9, Zeile 18 * <br> --- | 1,3 | |
| D,A | DE-A-2 224 201 (BAYERN CHEMIE) <br> * Anspruch 1 * <br> ----- | | |

RECHERCHIERTE SACHGEBIETE (Int. Cl.5)

B 60 R

Der vorliegende Recherchenbericht wurde für alle Patentansprüche erstellt

| Recherchenort | Abschlußdatum der Recherche | Prüfer |
|---|---|---|
| BERLIN | 06-12-1989 | STANDRING M A |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
........................................................
& : Mitglied der gleichen Patentfamilie, übereinstimmendes Dokument

EPO FORM 1503 03.82 (P0403)